# EUROPEAN PATENT APPLICATION

(11) **EP 1 987 914 A1**
(43) Date of publication of application: **05.11.2008**
(21) Application number: 08155284.6
(22) Date of filing: 28.04.2008
(51) Int. Cl.: B23Q 3/155, B27G 13/10

(54) **Tool-bearing shaft with tool identifying means**

(30) Priority: 02.05.2007 IT MO20070146
(71) Applicant: SCM Group S.p.A., 47900 Rimini (IT)
(72) Inventor: Spazzoli, Andrea, 47814 Bellaria Igea Marina (RN) (IT)
(74) Representative: Crugnola, Pietro

(57) **Abstract**

A tool-bearing shaft fixable to a spindle of a spindle moulder for supporting a tool (2) comprises identifying means (23) for containing information for identifying said tool (2).

## Description

The invention relates to a tool-bearing shaft.

In particular, the invention relates to a tool-bearing shaft that is fixable to a spindle of a spindle moulder for supporting a tool for machining workpieces made of wood or similar materials.

Tool-bearing shafts are known comprising an elongated portion on which a tool, for example a milling tool, and a plurality of spacing rings are fittable.

The spacing rings, for example located on the elongated portion on opposite sides to the tool, are used for positioning the tool on the elongated portion at a desired working height that depends on the type of tool and machining to be performed and have heights that are different from one another.

Such tool-bearing shafts further comprise locking means, fixed to an end of the elongated portion, to lock axially the tool and the spacing rings.

A problem that distresses users of such tool-bearing shafts relates to the tasks to be performed to enable numeric control that manages and commands the spindle moulder to recognise a tool that has just been mounted following a tool change.

Such tasks are, in fact, performed manually by an operator and comprise recalling from a suitable human interface, or control panel, positioned on the spindle moulder, a page containing a database relating to the different tools that are usable by the spindle moulder, and subsequently selecting from the page the tool that has just been mounted. It is clear that such tasks, as they are manual, are particularly slow to be performed, costly, and may lead to possible data entry errors by the operator.

An object of the invention is to improve tool-bearing shafts, in particular the tool-bearing shafts that are fixable to a spindle of a spindle moulder for supporting a tool for machining workpieces made of wood or similar materials.

A further object is to provide tool-bearing shafts that enable the tool recognition tasks to be performed in a rapid, cheap and precise manner.

According to the invention, a tool-bearing shaft is provided that is fixable to a spindle of a spindle moulder for supporting a tool for machining workpieces made of wood or similar materials, characterised in that there is provided identifying means for containing information for identifying said tool.

Owing to this aspect of the invention it is possible to provide tool-bearing shafts that enable tool recognition tasks to be performed in a fast, cheap and precise manner.

In fact, said identifying means comprises a transponder, which is not costly and is easily commercially obtainable, which is provided with a memory containing said information. Said information comprise an alphanumeric code associated with a line of a tool database containing the data identifying said tool.

In particular, this tool database is contained in a numeric control arranged for managing and commanding said spindle moulder and comprises a plurality of lines, each of which contains the data identifying a tool usable by said spindle moulder.

In another embodiment of the invention, said information comprises directly the aforesaid identifying data.

In use, the transponder, for example a passive transponder, is excited by and transmits said information to a transreceiving, the information being then transmitted from the transreceiving to the numeric control of the spindle moulder by suitable wirings.

In another embodiment of the invention, said information is transmitted by the transreceiving to the numeric control of said spindle moulder via radio-frequency.

In this manner, owing to the aforesaid transponder, said tool is recognised by the numeric control of said spindle moulder in an automatic, fast and precise manner, without the manual intervention of any operator.

The invention can be better understood and implemented with reference to the attached drawings that illustrate an embodiment thereof by way of non-limiting example, in which:
Figure 1 is a longitudinal section of a tool-bearing shaft;
Figure 2 is a side view of locking means included in the tool-bearing shaft in Figure 1;
Figure 3 is a section taken along the plane III-III of the locking means in Figure 2;
Figure 4 is a top view of Figure 2;
Figure 5 is a bottom view of Figure 2.

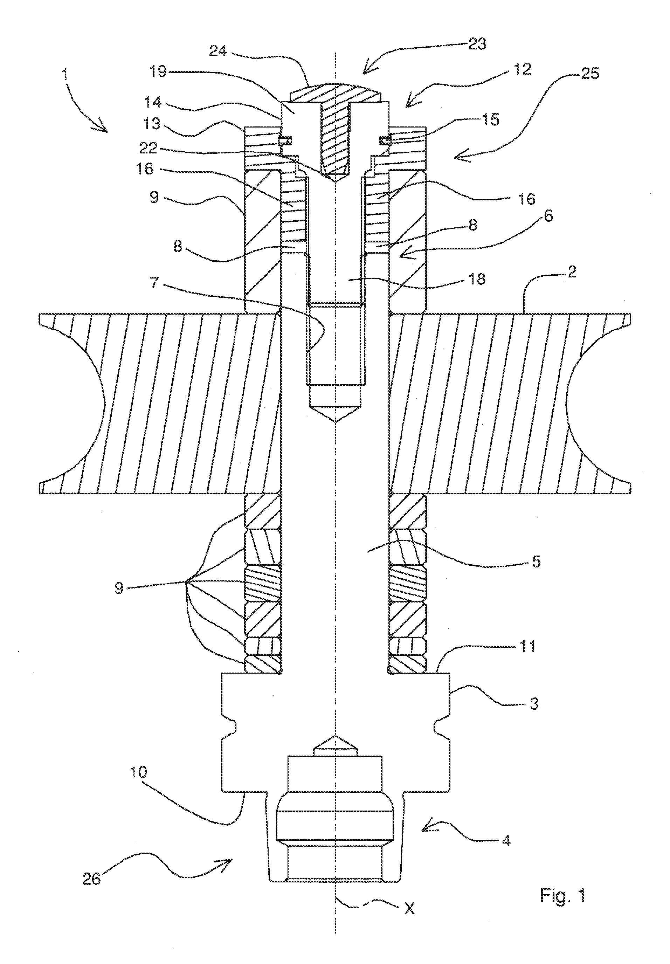

With reference to Figure 1, there is shown a tool-bearing shaft 1 fixable to a spindle of a spindle moulder, which is not shown, for supporting a tool 2, for example a milling tool, for machining workpieces made of wood or similar materials, which are not shown, for making frames, shaped sections, joints, grooves and the like.

The tool-bearing shaft 1 extends along, and is rotatable around, a rotation axis X and comprises a substantially cylindrical base body 3.

The tool-bearing shaft 1 further comprises quick-connection means 4, for example cone-shaped, projecting from a first surface 10 of the base body 3 facing, in use, the aforesaid spindle, and arranged for engaging further quick-connection means, which is not shown, of the spindle.

The tool-bearing shaft 1 further comprises an elongated portion 5, projecting from a second surface 11 of the base body 3 opposite the first surface 10.

The elongated portion 5, having a substantially cylindrical shape, is provided in an end portion 6 thereof, distant from the base body 3, with a threaded hole 7 extending along the axis X and with a pair of recesses 8, having a substantially rectangular-base parallelepipedon shape, extending substantially parallel to, and positioned on opposite sides to, the axis X.

Onto the elongated portion 5 in addition to the tool 2, a plurality of spacing rings 9, are fittable, which spacing rings 9 substantially have the shape of a hollow cylinder.

The spacing rings 9, located on opposite sides to the tool 2, may have heights that are different from one another and are used to position the tool 2 on the elongated portion 5 at a desired working height depending on the type of tool 2 and of machining to be performed.

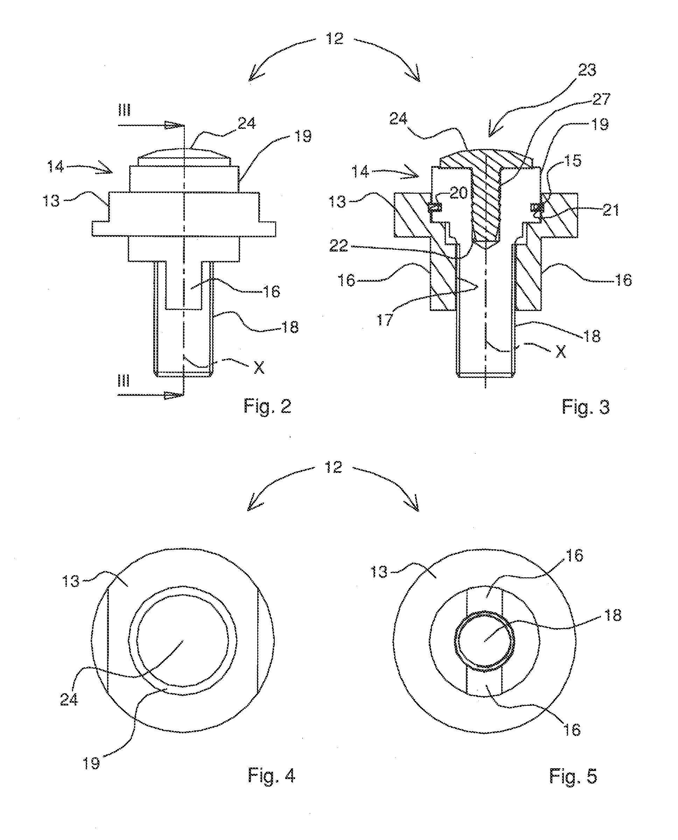

The tool-bearing shaft 1 further comprises locking means 12, shown in detail in Figures 2 to 5, to lock axially the tool 2 and the spacing rings 9 on the elongated portion 5.

The locking means 12 comprises a locking washer 13 provided with a pair of elongated elements 16 each arranged, in use, for engaging one of the recesses 8 of the elongated portion 5, the elongated elements 16 acting as non-rotating elements.

In other words, the elongated elements 16 prevent, in use, the washer 13 rotating with respect to the elongated portion 5.

The washer 13 is further provided with a through hole 17 arranged for receiving a shank 18 of a locking screw 14 comprised in the locking means 12 and arranged for engaging in the hole 7 of the elongated element 5.

The screw 14 comprises a head 19 provided with a first side groove 20, facing, in use, a second internal groove 21, obtained in the washer 13, in the first groove 20 there being mounted an elastic ring 15.

In this manner, in use, the elastic ring 15 locks the screw 14 axially with respect to the washer 13.

The head 19 comprises a seat 22, extending along the axis X, wherein a notched portion 27 of identifying means 23 is inserted, for example by pressure, for identifying the tool 2.

In an embodiment of the invention, which is not shown, the seat 22 is threaded, and the identifying means 23 comprises a threaded portion arranged for engaging the seat 22.

In this manner, in use, the identifying means 23, inserted at least partially into the seat 22, is positioned in an end zone 25 of the tool-bearing shaft 1 opposite a further end zone 26 of the tool-bearing shaft 1, wherein the aforesaid quick-connection means 4 is provided.

The identifying means 23 comprises a transponder 24 of known type, for example a passive transponder.

The transponder 24, having a mushroom shape, is provided with a memory, for example of the non-writable type, containing information to enable a numeric control arranged for managing and commanding the spindle moulder to identify the tool 2.

This information comprises an alphanumeric code associated with a line of a tool database containing the data identifying the tool 2.

In particular, this tool database is contained in the aforesaid numeric control and comprises a plurality of lines, each of which contains the identifying data of a tool 2 that is usable by said spindle moulder and is mountable on the tool-bearing shaft 1.

In an embodiment of the invention, which is not shown, the aforesaid memory is of the writable type, and this information comprises the aforesaid identifying data directly.

The transponder 24 further comprises an aerial, which is not shown, for intercepting a radio frequency emitted by a further aerial of a transreceiving, which is not shown, which is mounted on the spindle moulder.

In this manner, the transreceiving provides the transponder 24 with the energy necessary for operating.

In other words, in use, the transponder 24 picks up the radio frequency with the aerial, obtaining the energy that is sufficient for sending to the transreceiving the information contained in the memory thereof.

The transreceiving can be of the gun type, movable away from, and towards, the transponder 24.

In this manner, in order to identify the tool 2 it is sufficient to move the gun towards the transponder 24 and to press a switch activating the transreceiving.

In an embodiment of the invention, which is not shown, the transreceiving is of the fixed type.

In use, the information transmitted by the transponder 24 to the transreceiving is then transferred from the transreceiving to the numeric control of the spindle moulder by suitable wirings.

In another embodiment of the invention, said information is transmitted by the transreceiving to the numeric control of said spindle moulder by radio frequency.

In a further embodiment of the invention, which is not shown, the transponder 24 is positioned in a further seat obtained in the washer 13 and extending substantially parallel to the axis X.

In a still further embodiment of the invention, which is not shown, the transponder 24 can have any shape, for example it can be button-shaped.

In another further embodiment of the invention, which is not shown, the transponder 24 is an active transponder.

It should be noted how, owing to the transponder 24, the tool 2 mounted on the tool-bearing shaft 1 is recognised by the numeric control of the spindle moulder in an automatic, fast and precise manner, without the manual intervention of any operator.

## Claims

1. Tool-bearing shaft fixable to a spindle of a spindle moulder for supporting a tool (2) for machining workpieces made of wood or similar materials, **characterised in that** there is provided identifying means (23) for containing information for identifying said tool (2).

2. Shaft according to claim 1, wherein said identifying means (23) comprises a transponder (24).

3. Shaft according to claim 2, wherein said transponder (24) is a passive transponder.

4. Shaft according to claim 2, or 3, wherein said transponder (24) is positioned in an end zone (25) of said shaft (1) opposite a further end zone (26) of said shaft (1) that is fixable to said spindle.

5. Shaft according to any one of claims 2 to 4, and comprising a seat (22) extending along a rotation axis (X) of said shaft (1) to receive, at least partially, said transponder (24).

6. Shaft according to claim 5, wherein said seat (22) is obtained in locking means (12) of said shaft (1) arranged for locking said tool (2) on said shaft (1).
